# EUROPEAN PATENT SPECIFICATION

(11) **EP 4 526 579 B1**
(45) Date of publication and mention of the grant of the patent: **23.09.2026**
(21) Application number: 23730291.4
(22) Date of filing: 16.05.2023
(51) Int. Cl.: F16H 57/04

(54) **ELECTRIC VEHICLE TRANSMISSION**
ELEKTROFAHRZEUGGETRIEBE
TRANSMISSION DE VÉHICULE ÉLECTRIQUE

(30) Priority: 17.05.2022 US 202263342735 P
(43) Date of publication of application: 26.03.2025
(73) Proprietor: BorgWarner Inc., Auburn Hills, MI 48326 (US)
(72) Inventor: CAMPTON, Calahan, B., Royal Oak, MI 48073 (US)
(74) Representative: Peterreins Schley
(86) International application number: PCT/US2023/022332
(87) International publication number: WO 2023/224954

(56) References cited:
- WO-A1-2018/061443
- CN-A- 110 259 923
- US-A1- 2012 073 403
- US-A1- 2022 099 177
- US-B2- 10 746 282
- US-B2- 8 746 405

## Description

### BACKGROUND OF THE DISCLOSURE

### 1. Field of the Disclosure

The present invention generally relates to an electric vehicle transmission.

### 2. Description of the Related Art

Conventional electric vehicle transmissions of a vehicle include a housing defining a housing interior and a sump for retaining oil, an electric motor including a rotor and a stator disposed in the housing interior, an input shaft disposed in the housing interior and extending along a shaft axis with the shaft being rotatably coupled to the rotor of the electric motor, and a gear reduction assembly disposed in the housing interior. The gear reduction assembly is rotatably coupled to the input shaft for delivering rotational torque to wheels of the vehicle. Oil is typically distributed throughout the electric vehicle transmission from the sump through the use of at least one pump. However, typical electric vehicle transmission using at least one pump to distribute oil throughout the electric vehicle transmission require the at least one pump to be larger, which occupies space in the vehicle and increases the cost of the electric vehicle assembly.

US 8 746 405 B2 discloses a system for lubricating a differential mechanism including a housing containing a ring gear, a pinion meshing with the ring gear, a sump containing fluid, and a reservoir that receives fluid flung from the ring gear as the ring gear rotates through the sump fluid, and an orifice restricting the flow rate of fluid from the reservoir.

Accordingly, there remains a need for an improved electric vehicle transmission.

### SUMMARY OF THE INVENTION

An electric vehicle transmission for a vehicle includes a housing defining a housing interior and an electric motor disposed in the housing interior. The electric motor includes a rotor and a stator. The electric vehicle transmission also includes an input shaft disposed in the housing interior and extending along a shaft axis. The input shaft is rotatably coupled to the rotor of the electric motor. The electric vehicle transmission further includes a gear reduction assembly disposed in the housing interior. The gear reduction assembly is rotatably coupled to the input shaft for delivering rotational torque to wheels of the vehicle. The electric vehicle transmission additionally includes a carrier coupled to the gear reduction assembly. The housing defines a sump for retaining oil. The carrier is configured to bail oil from said sump to lubricate the gear reduction assembly. The sump is further defined as a first sump and a second sump separate from said first sump. The first and second sumps are configured such that oil lubricates said gear reduction assembly when flowing from said second sump into said first sump. The carrier is configured to bail oil from said first sump to said second sump during rotation of said gear reduction assembly. The carrier has a circular configuration.

### BRIEF DESCRIPTION OF THE DRAWINGS

Other advantages of the present disclosure will be readily appreciated, as the same becomes better understood by reference to the following detailed description when considered in connection with the accompanying drawings.
FIG. 1 is a perspective view of an electric vehicle transmission including a housing defining a housing interior;
FIG. 2 is a perspective view of a gear reduction assembly;
FIG. 3 is a front view of a gear reduction assembly;
FIG. 4 is a front view of the electric vehicle transmission including a housing defining a first sump and a second sump;
FIG. 5 is a perspective view of the electric vehicle transmission;
FIG. 6 is a perspective view of the electric vehicle transmission;
FIG. 7 is front view of a planetary gear set and a carrier of the electric vehicle transmission;
FIG. 8 is front view of a planetary gear set and another embodiment of the carrier of the electric vehicle transmission;
FIG. 9 is front view of a planetary gear set and another embodiment of the carrier of the electric vehicle transmission;
FIG. 10 is a cross-sectional view of the electric vehicle transmission, with the housing interior having an electric motor side and a gear reduction side; and
FIG. 11 is an exploded perspective view of the gear reduction assembly.

### DETAILED DESCRIPTION OF THE INVENTION

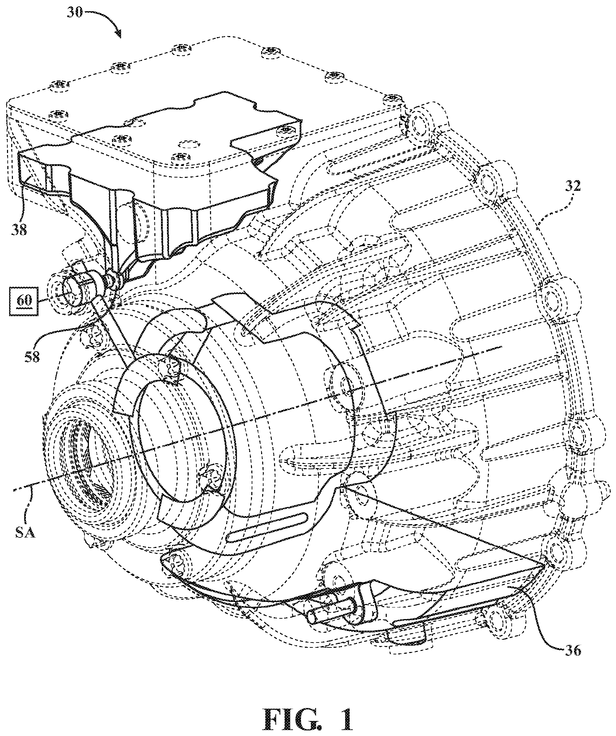

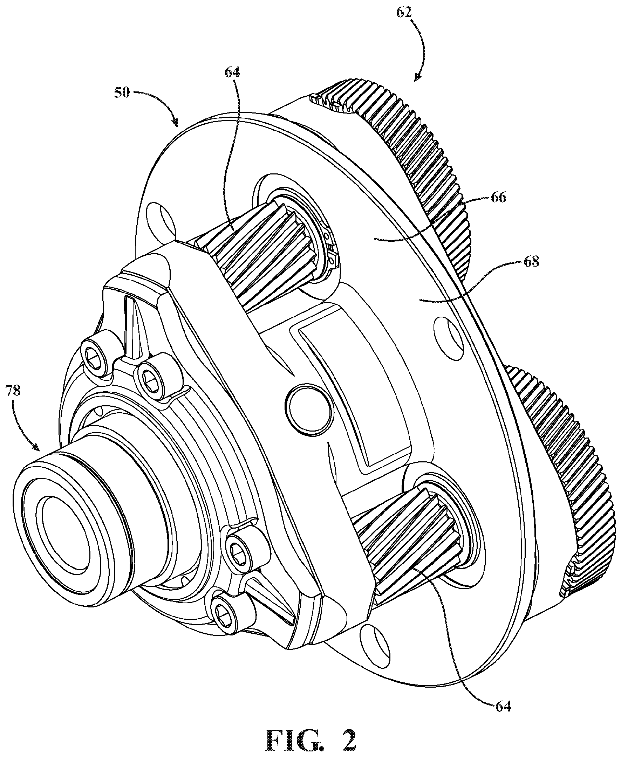

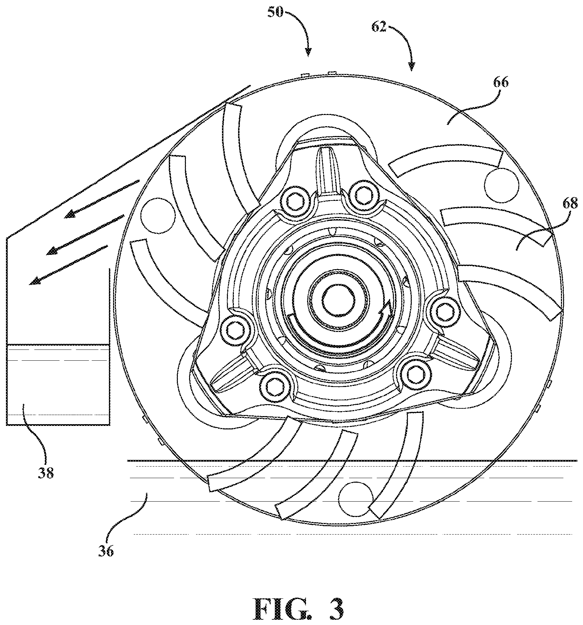

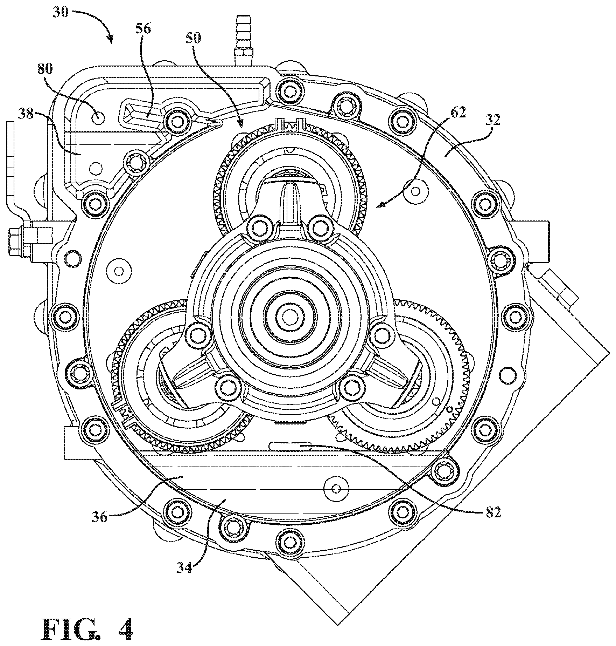

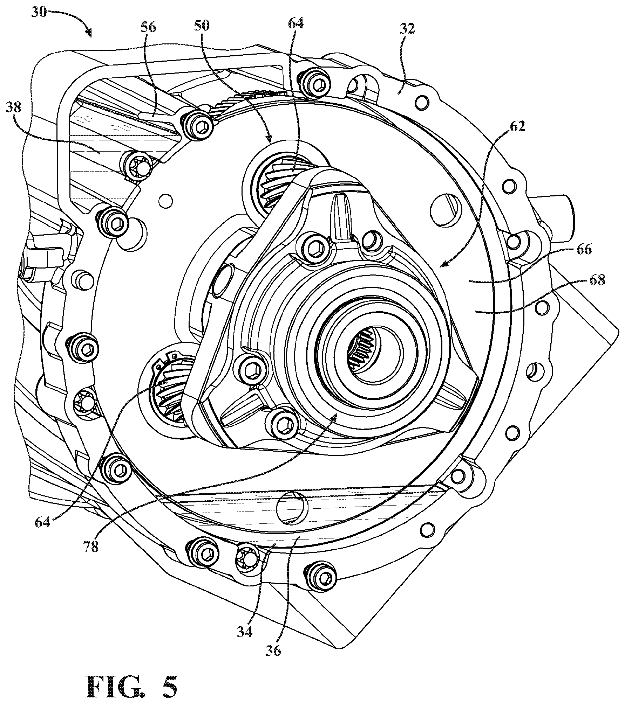

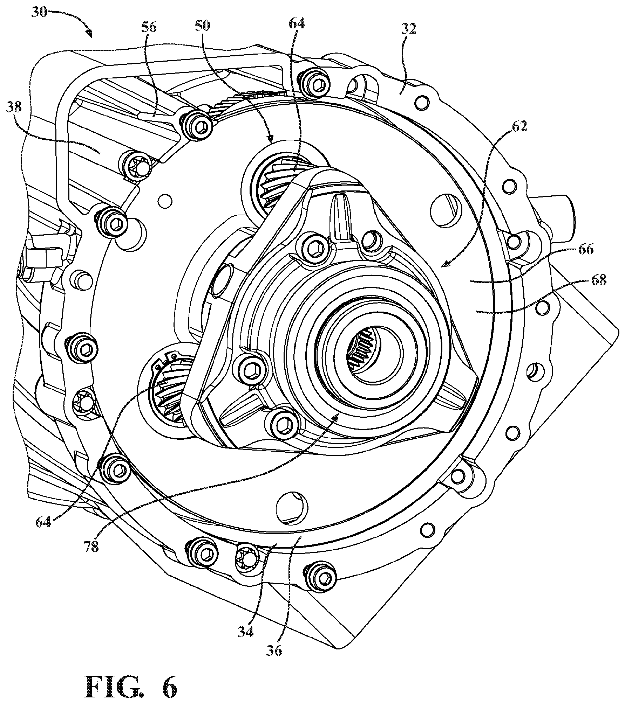

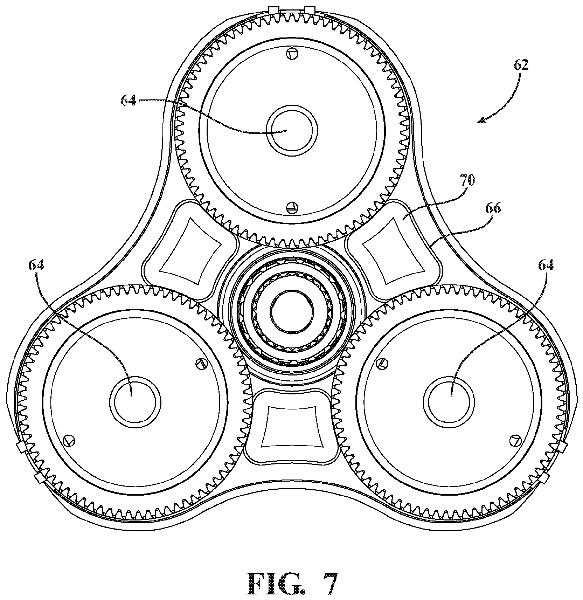

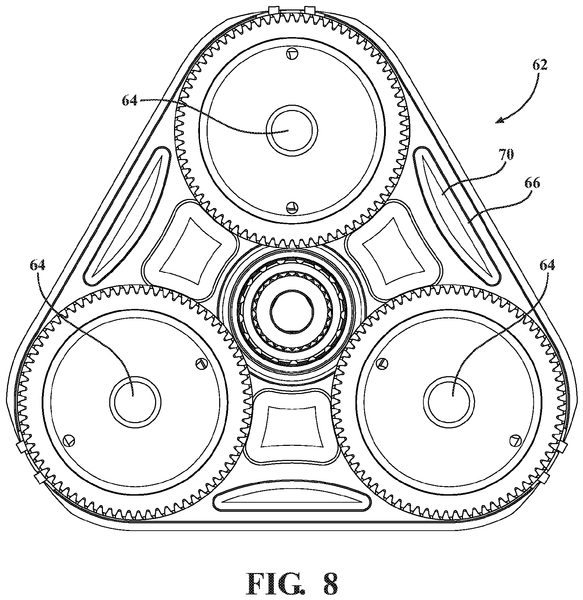

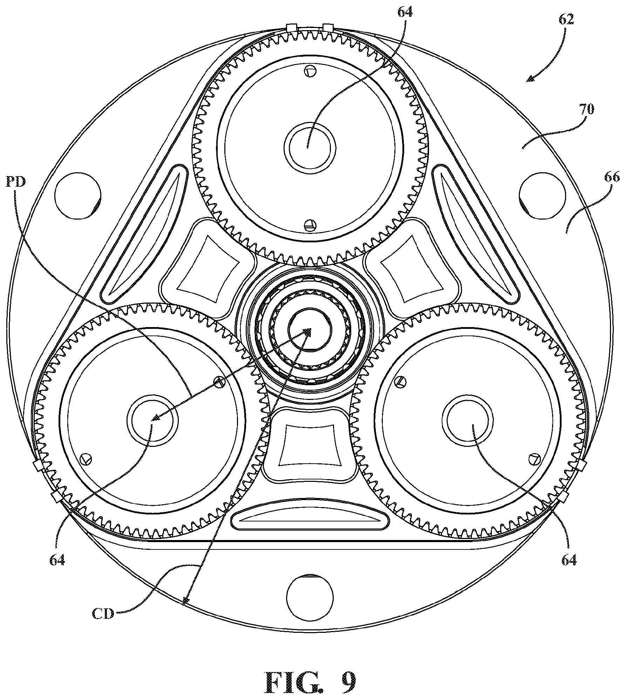

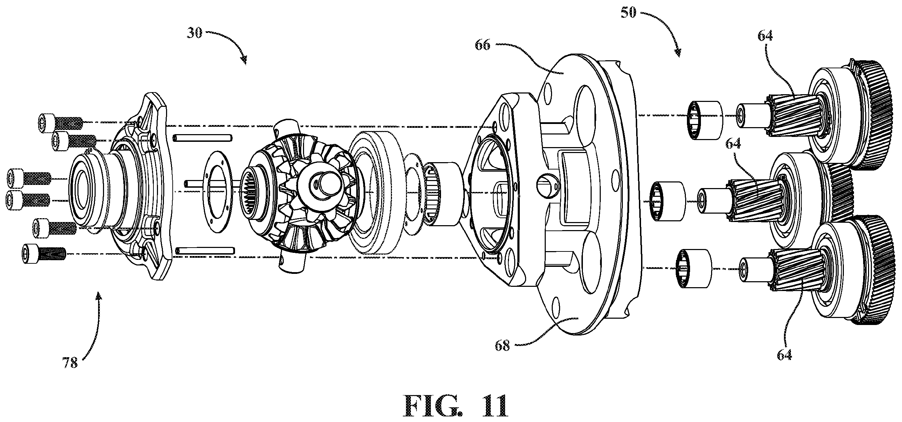

With reference to the Figures, wherein like numerals indicate like parts throughout the several views, an electric vehicle transmission 30 for a vehicle is generally shown in FIGS. 1-11. The electric vehicle transmission 30 includes a housing 32 defining a housing interior 34. The electric vehicle transmission also includes an electric motor 40 disposed in the housing interior 34. The electric motor 40 includes a rotor 42 and a stator 44. The electric vehicle transmission 30 further includes an input shaft 46 disposed in the housing interior 34 and extending along a shaft axis SA. The input shaft 46 is rotatably coupled to the rotor 42 of the electric motor 40. The electric vehicle transmission 30 typically includes a first output shaft 47, and a second output shaft 49. The input shaft 46 and the first output shaft 47 may be concentric shafts. The electric vehicle transmission 30 additionally includes a gear reduction assembly 50 disposed in the housing interior 34. The gear reduction assembly 50 is rotatably coupled to the input shaft 46 for delivering rotational torque to wheels of the vehicle.

The housing 32 defines a first sump 36 for retaining oil and a second sump 38 separate from the first sump 36 for retaining oil. The housing 32 housing may include a housing protrusion 56 extending into the second sump 38 for further defining the second sump 38. The second sump 38 and the first sump 36 are configured such that oil lubricates the gear reduction assembly 50 when flowing from the second sump 38 into the first sump 36. Having the second sump 38 and the first sump 36 configured such that oil lubricates the gear reduction assembly 50 when flowing from the second sump 38 into the first sump 36 allows the electric vehicle transmission 30 to have a smaller pump to lubricating the electric motor 40, as described in further detail below. Additionally, having the second sump 38 and the first sump 36 configured such that oil lubricates the gear reduction assembly 50 when flowing from the second sump 38 into the first sump 36 allows the lubrication of the gear reduction assembly 50 to be dependent on rotational speed of components of the electric vehicle transmission 30, as described in further detail below.

In one embodiment, the second sump 38 and the first sump 36 are configured to passively control oil from flowing from the second sump 38 and the first sump 36. In other words, the electric vehicle transmission 30 may be free of a valve, such as a solenoid valve, for actively controlling oil from flowing between the second sump 38 and the first sump 36. Typically, the oil flows from the second sump 38 to the first sump 36 by way of gravity. To control the amount of oil flowing from the second sump 38 to the first sump 36, an oil passageway 58 may be defined between the second sump 38 and the first sump 36, with the flow area of the oil passageway 58 being sized based on the desired amount of flow of oil from the second sump 38 to the first sump 36. Typically, the amount of oil that flows through the oil passageway 58 is less than the amount of oil that is bailed from the first sump 36 to the second sump 38. Alternatively, the electric vehicle transmission 30 may include a valve 60, such as a solenoid valve, disposed between the second sump 38 and said first sump to actively control oil from flowing between the second sump 38 and the first sump 36.

The gear reduction assembly 50 may be further defined as a planetary gear set 62. The planetary gear set 62 may include a plurality of pinion gears 64 disposed about the shaft axis SA. The plurality of pinion gears 64 may be defined as three pinion gears 64 and may be radially separated by 120 degrees from one another about the shaft axis SA.

The electric vehicle transmission 30 includes a carrier 66, such as a disc, coupled to the gear reduction assembly 50. The carrier 66 is configured to bail (i.e., deliver) oil from the first sump 36 to the second sump 38 during rotation of the gear reduction assembly 50. According to the invention, the carrier 66 has a circular configuration. The carrier 66 may have a first carrier surface 68 facing a first direction with respect to the shaft axis SA, and a second carrier surface 70 facing a second direction opposite the first direction with respect to the shaft axis SA. The first and second carrier surfaces 68, 70 may have a flat configuration. Having a flat configuration allows the carrier 66 to rotate through the oil in the first sump with minimal drag losses, all while still allowing oil to dispose on the first and second carrier surfaces 68, 70 and to be delivered to the second sump 38 due to rotation of the carrier 66. The first and second carrier surfaces 68, 70 may be parallel to one another. It is to be appreciated that the first and second carrier surfaces 68, 70 may have elevations and/or indentations for aiding in the bailing of oil from the first sump 36 to the second sump 38 during rotation of the carrier 66. Whether the first and second carrier surfaces 68, 70 are flat, or have indentations and/or elevations, is dependent balancing the desire for reduced drag of the carrier 66 through the oil in the first sump 36 against the amount of oil that needs to be bailed from the first sump 36 to the second sump 38.

The pinion gears 64 may define a pinion diameter PD. The carrier 66 may define a carrier diameter CD. Typically, the carrier diameter CD is greater than the pinion diameter PD. It is to be appreciated that the carrier 66 may have an increased diameter portion to further allow the carrier 66 to enter the oil disposed in the first sump 36 to then bail the oil into the second sump 38 during rotation of the carrier 66. In addition to be configured to bail the oil from the first sump 36 to the second sump 38, the carrier 66 also provides additional support to the pinion gears 64 such that deflection of components of the electric vehicle transmission 30, in particular the gear reduction assembly 50, is reduced. To this end, when the carrier 66 is present, the carrier 66 is able to move oil from the first sump 36 to the second sump 38 and reduce spin losses of the electric vehicle transmission 30.

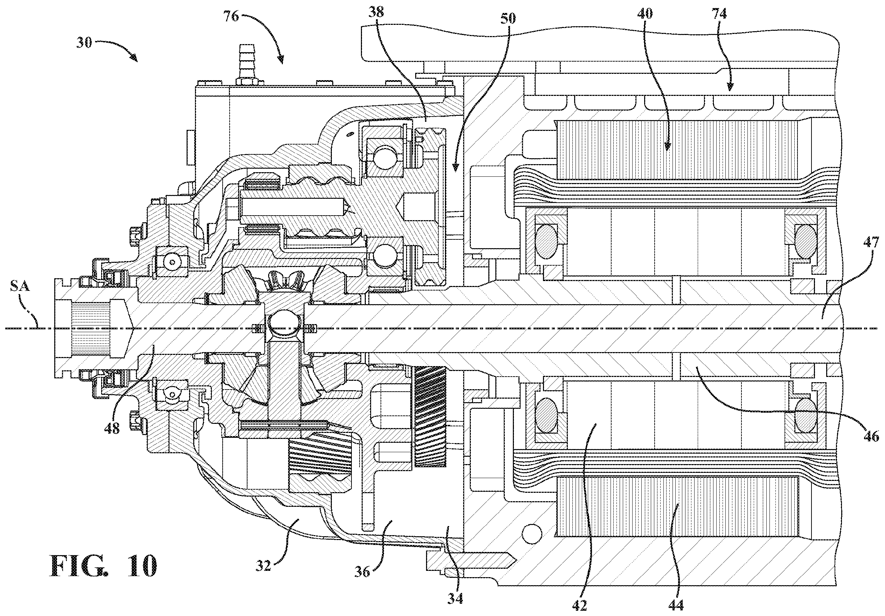

The housing interior 34 may be divided into an electric motor side 74 and a gear reduction side 76, as best shown in FIG. 10. Typically, the electric vehicle transmission 30 includes a pump for circulating oil in the electric motor side 74 of the housing interior 34. The electric vehicle transmission 30 may be free of a pump for circulating oil in the gear reduction side 76 of the housing interior 34. Due to the requirement to cool the electric motor 40, the electric motor side 74 of the housing interior 34 typically requires a higher flow and circulation of oil to cool the electric motor 40. The pump circulates the oil and cools the oil through a heat exchanger of the electric vehicle transmission 30. When the carrier 66 is present, the gear reduction side 76 of the housing interior 34 typically does not require a pump due to the carrier 66 bailing oil from the first sump 36, to the second sump 38, and allowing gravity to draw oil from the second sump 38 toward the first sump 36 and lubricating the gear reduction assembly 50. To help with directing the oil throughout the gear reduction assembly 50 and to other components of the electric vehicle transmission 30, the electric vehicle transmission 30 may include an oil distribution assembly 78 disposed in the housing interior 34. Typically, the oil distribution assembly 78 is disposed between the second sump 38 and the first sump 36 such that oil flows from the second sump 38, to the oil distribution assembly 78, and to the first sump 36 after the oil lubricates the gear reduction assembly 50 and other components of the electric vehicle transmission 30, such as bearings, gears, and bushings.

To balance the amount of oil in the electric motor side 74 and the gear reduction side 76 of the housing interior, the housing 32 in the second sump 38 may define an upper overfill bleed orifice 80 for allowing oil to flow between the electric motor side 74 and the gear reduction side 76. Similarly, the housing 32 in the first sump 36 may define a lower overfill bleed orifice 82 for allowing oil to flow between the electric motor side 74 and the gear reduction side 76.

## Claims

1. An electric vehicle transmission (30) for a vehicle, comprising:
a housing (32) defining a housing interior (34);
an electric motor (40) disposed in said housing interior (34), wherein said electric motor (40) comprises a rotor (42) and a stator (44);
an input shaft (46) disposed in said housing interior (34) and extending along a shaft axis (SA), wherein said input shaft (46) is rotatably coupled to said rotor (42) of said electric motor (40);
a gear reduction assembly (50) disposed in said housing interior (34), wherein said gear reduction assembly (50) is rotatably coupled to said input shaft (46) for delivering rotational torque to wheels of the vehicle; and
a carrier (66) coupled to said gear reduction assembly (50);
wherein said housing (32) defines a sump (36, 38) for retaining oil, and wherein said carrier (66) is configured to bail oil from said sump to lubricate said gear reduction assembly (50), wherein said sump is further defined as a first sump (36) and a second sump (38) separate from said first sump (36), and wherein said first (36) and second (38) sumps are configured such that oil lubricates said gear reduction assembly (50) when flowing from said second sump (38) into said first sump (36),
wherein said carrier (66) is configured to bail oil from said first sump (36) to said second sump (38) during rotation of said gear reduction assembly (50),
**characterized in that** said carrier (66) has a circular configuration.

2. The electric vehicle transmission (30) as set forth in claim 1, wherein said carrier (66) has a first carrier surface (68) facing a first direction with respect to said shaft axis (SA), and a second carrier surface (70) facing a second direction opposite said first direction with respect to said shaft axis (SA), and wherein said first (68) and second (70) carrier surfaces have a flat configuration.

3. The electric vehicle transmission (30) as set forth in any one of the preceding claims, wherein said carrier (66) has a first carrier surface (68) facing a first direction with respect to said shaft axis (SA), and a second carrier surface (70) facing a second direction opposite said first direction with respect to said shaft axis (SA), wherein at least one of said first (68) and second (70) carrier surfaces have elevations and/or indentations for aiding in the bailing of oil from said first sump (36) to said second sump (38) during rotation of said carrier (66).

4. The electric vehicle transmission (30) as set forth in any one of the preceding claims, wherein said second sump (38) and said first sump (36) are configured to passively control oil from flowing between said second sump (38) and said first sump (36).

5. The electric vehicle transmission (30) as set forth in any one of the preceding claims further comprising a valve (60) disposed between said second sump (38) and said first sump (36) to actively control oil from flowing between said second sump (38) and said first sump (36).

6. The electric vehicle transmission (30) as set forth in any one of the preceding claims, wherein said gear reduction assembly (50) is further defined as a planetary gear set (62).

7. The electric vehicle transmission (30) of claim 6, wherein said planetary gearset (62) comprises a plurality of pinion gears (64) disposed about said shaft axis (SA), wherein said plurality of pinion gears (64) are preferably defined as three pinion gears (64) and particularly preferably are radially separated by 120 degrees from one another about said shaft axis (SA).

8. The electric vehicle transmission (30) as set forth in any one of the preceding claims, wherein said housing interior (34) is divided into an electric motor side (74) and a gear reduction side (76).

9. The electric vehicle transmission (30) as set forth in claim 8, wherein said housing (32) in said second sump (38) defines an upper overfill bleed orifice (80) for allowing oil to flow between said electric motor side (74) and said gear reduction side (76).

10. The electric vehicle transmission (30) as set forth in any one of claims 8 and 9, wherein said housing (32) in said first sump (36) defines a lower overfill bleed orifice (82) for allowing oil to flow between said electric motor side (74) and said gear reduction side (76).

11. The electric vehicle transmission (30) as set forth in any one of claims 8-10, further comprising a pump for circulating oil in said electric motor side (74) of said housing interior (34).

12. The electric vehicle transmission (30) as set forth in any one of claims 8-11, being free of a pump for circulating oil in said gear reduction side (76) of said housing interior (34).

13. The electric vehicle transmission (30) as set forth in any one of the preceding claims, further comprising an oil distribution assembly (78) disposed in said housing interior (34), wherein said oil distribution assembly (78) is disposed between said second sump (38) and said first sump (36) such that oil flows from said second sump (38), to said oil distribution assembly (78), and to said first sump (36) after the oil lubricates the gear reduction assembly (50).

## Patentansprüche

1. Elektrofahrzeuggetriebe (30) für ein Fahrzeug, umfassend:
ein Gehäuse (32), das ein Gehäuseinneres (34) definiert;
einen Elektromotor (40), angeordnet in dem Gehäuseinneren (34), wobei der Elektromotor (40) einen Rotor (42) und einen Stator (44) umfasst;
eine Eingangswelle (46), angeordnet in dem Gehäuseinneren (34) und sich entlang einer Wellenachse (SA) erstreckend, wobei die Eingangswelle (46) drehbar mit dem Rotor (42) des Elektromotors (40) gekoppelt ist;
eine Ganguntersetzungsanordnung (50), angeordnet in dem Gehäuseinneren (34), wobei die Ganguntersetzungsanordnung (50) drehbar mit der Eingangswelle (46) gekoppelt ist, um Drehmoment an Räder des Fahrzeugs zu liefern; und
einen Träger (66), der mit der Ganguntersetzungsanordnung (50) gekoppelt ist;
wobei das Gehäuse (32) einen Sumpf (36, 38) zum Zurückhalten von Öl definiert, und wobei der Träger (66) dazu ausgelegt ist, Öl zum Schmieren der Ganguntersetzungsanordnung (50) aus dem Sumpf zu schöpfen, wobei der Sumpf ferner als ein erster Sumpf (36) und ein zweiter Sumpf (38) getrennt von dem ersten Sumpf (36) definiert ist, und wobei der erste (36) und der zweite (38) Sumpf so ausgelegt sind, dass Öl die Ganguntersetzungsanordnung (50) schmiert, wenn es von dem zweiten Sumpf (38) in den ersten Sumpf (36) fließt,
wobei der Träger (66) dazu ausgelegt ist, während der Drehung der Ganguntersetzungsanordnung (50) Öl aus dem ersten Sumpf (36) in den zweiten Sumpf (38) zu schöpfen,
**dadurch gekennzeichnet, dass** der Träger (66) eine kreisförmige Konfiguration aufweist.

2. Elektrofahrzeuggetriebe (30) nach Anspruch 1, wobei der Träger (66) eine erste Trägerfläche (68), die einer ersten Richtung in Bezug auf die Wellenachse (SA) zugewandt ist, und eine zweite Trägerfläche (70), die einer zweiten Richtung entgegengesetzt zu der ersten Richtung in Bezug auf die Wellenachse (SA) zugewandt ist, aufweist, und wobei die erste (68) und die zweite (70) Trägerfläche eine flache Konfiguration aufweisen.

3. Elektrofahrzeuggetriebe (30) nach irgendeinem der vorhergehenden Ansprüche, wobei der Träger (66) eine erste Trägerfläche (68), die einer ersten Richtung in Bezug auf die Wellenachse (SA) zugewandt ist, und eine zweite Trägerfläche (70), die einer zweiten Richtung entgegengesetzt zu der ersten Richtung in Bezug auf die Wellenachse (SA) zugewandt ist, aufweist, wobei mindestens eine von der ersten (68) und der zweiten (70) Trägerfläche Erhebungen und/oder Vertiefungen aufweist, um beim Schöpfen von Öl während der Drehung des Trägers (66) aus dem ersten Sumpf (36) in den zweiten Sumpf (38) zu helfen.

4. Elektrofahrzeuggetriebe (30) nach irgendeinem der vorhergehenden Ansprüche, wobei der zweite Sumpf (38) und der erste Sumpf (36) dazu ausgelegt sind, den Ölfluss zwischen dem zweiten Sumpf (38) und dem ersten Sumpf (36) passiv zu steuern.

5. Elektrofahrzeuggetriebe (30) nach irgendeinem der vorhergehenden Ansprüche, ferner umfassend ein Ventil (60), angeordnet zwischen dem zweiten Sumpf (38) und dem ersten Sumpf (36), um den Ölfluss zwischen dem zweiten Sumpf (38) und dem ersten Sumpf (36) aktiv zu steuern.

6. Elektrofahrzeuggetriebe (30) nach irgendeinem der vorhergehenden Ansprüche, wobei die Ganguntersetzungsanordnung (50) ferner als ein Planetenradsatz (62) definiert ist.

7. Elektrofahrzeuggetriebe (30) nach Anspruch 6, wobei der Planetenradsatz (62) mehrere Ritzel (64) umfasst, die um die Wellenachse (SA) angeordnet sind, wobei die mehreren Ritzel (64) vorzugsweise als drei Ritzel (64) definiert sind und besonders bevorzugt radial um 120 Grad voneinander um die Wellenachse (SA) getrennt sind.

8. Elektrofahrzeuggetriebe (30) nach irgendeinem der vorhergehenden Ansprüche, wobei das Gehäuseinnere (34) in eine Elektromotorseite (74) und eine Ganguntersetzungsseite (76) unterteilt ist.

9. Elektrofahrzeuggetriebe (30) nach Anspruch 8, wobei das Gehäuse (32) in dem zweiten Sumpf (38) eine obere Überfüllablassöffnung (80) definiert, um zu ermöglichen, dass Öl zwischen der Elektromotorseite (74) und der Ganguntersetzungsseite (76) fließt.

10. Elektrofahrzeuggetriebe (30) nach irgendeinem der Ansprüche 8 oder 9, wobei das Gehäuse (32) in dem ersten Sumpf (36) eine untere Überfüllablassöffnung (82) definiert, um zu ermöglichen, dass Öl zwischen der Elektromotorseite (74) und der Ganguntersetzungsseite (76) fließt.

11. Elektrofahrzeuggetriebe (30) nach irgendeinem der Ansprüche 8-10, ferner umfassend eine Pumpe zum Zirkulieren von Öl auf der Elektromotorseite (74) des Gehäuseinneren (34).

12. Elektrofahrzeuggetriebe (30) nach irgendeinem der Ansprüche 8-11, ohne eine Pumpe zum Zirkulieren von Öl auf der Ganguntersetzungsseite (76) des Gehäuseinneren (34).

13. Elektrofahrzeuggetriebe (30) nach irgendeinem der vorhergehenden Ansprüche, ferner umfassend eine Ölverteilungsanordnung (78), angeordnet in dem Gehäuseinneren (34), wobei die Ölverteilungsanordnung (78) zwischen dem zweiten Sumpf (38) und dem ersten Sumpf (36) angeordnet ist, sodass Öl von dem zweiten Sumpf (38) zu der Ölverteilungsanordnung (78) und zu dem ersten Sumpf (36) fließt, nachdem das Öl die Ganguntersetzungsanordnung (50) schmiert.

## Revendications

1. Transmission de véhicule électrique (30) pour un véhicule, comprenant :
un carter (32) définissant un intérieur de carter (34) ;
un moteur électrique (40) disposé dans ledit intérieur de carter (34), dans laquelle ledit moteur électrique (40) comprend un rotor (42) et un stator (44) ;
un arbre d'entrée (46) disposé dans ledit intérieur de carter (34) et s'étendant le long d'un axe d'arbre (SA), dans laquelle ledit arbre d'entrée (46) est couplé de façon rotative audit rotor (42) dudit moteur électrique (40) ;
un ensemble démultiplicateur (50) disposé dans ledit intérieur de carter (34), dans laquelle ledit ensemble démultiplicateur (50) est couplé de façon rotative audit arbre d'entrée (46) pour délivrer un couple rotationnel à des roues du véhicule ; et
un support (66) couplé audit ensemble démultiplicateur (50) ;
dans laquelle ledit carter (32) définit un bac à huile (36, 38) destiné à contenir de l'huile, et dans laquelle ledit support (66) est configuré pour écoper de l'huile depuis ledit bac à huile pour lubrifier ledit ensemble démultiplicateur (50), dans laquelle ledit bac à huile est en outre défini sous forme de premier bac à huile (36) et de second bac à huile (38) distinct dudit premier bac à huile (36), et dans laquelle lesdits premier (36) et second (38) bacs à huile sont configurés de manière telle que de l'huile lubrifie ledit ensemble démultiplicateur (50) lorsqu'elle s'écoule depuis ledit second bac à huile (38) jusque dans ledit premier bac à huile (36),
dans laquelle ledit support (66) est configuré pour écoper de l'huile depuis ledit premier bac à huile (36) jusqu'audit second bac à huile (38) durant la rotation dudit ensemble démultiplicateur (50),
**caractérisée en ce que** ledit support (66) a une configuration circulaire.

2. Transmission de véhicule électrique (30) telle que présentée dans la revendication 1, dans laquelle ledit support (66) a une première surface de support (68) faisant face à une première direction par rapport audit axe d'arbre (SA), et une seconde surface de support (70) faisant face à une seconde direction opposée à ladite première direction par rapport audit axe d'arbre (SA), et dans laquelle lesdites première (68) et seconde (70) surfaces de support ont une configuration plate.

3. Transmission de véhicule électrique (30) telle que présentée dans l'une quelconque des revendications précédentes, dans laquelle ledit support (66) a une première surface de support (68) faisant face à une première direction par rapport audit axe d'arbre (SA), et une seconde surface de support (70) faisant face à une seconde direction opposée à ladite première direction par rapport audit axe d'arbre (SA), dans laquelle au moins une desdites première (68) et seconde (70) surfaces de support ont des élévations et/ou des renfoncements pour aider à écoper de l'huile depuis ledit premier bac à huile (36) jusqu'audit second bac à huile (38) durant la rotation dudit support (66).

4. Transmission de véhicule électrique (30) telle que présentée dans l'une quelconque des revendications précédentes, dans laquelle ledit second bac à huile (38) et ledit premier bac à huile (36) sont configurés pour contrôler passivement l'écoulement de l'huile entre ledit second bac à huile (38) et ledit premier bac à huile (36).

5. Transmission de véhicule électrique (30) telle que présentée dans l'une quelconque des revendications précédentes comprenant en outre une soupape (60) disposée entre ledit second bac à huile (38) et ledit premier bac à huile (36) pour contrôler activement l'écoulement de l'huile entre ledit second bac à huile (38) et ledit premier bac à huile (36).

6. Transmission de véhicule électrique (30) telle que présentée dans l'une quelconque des revendications précédentes, dans laquelle ledit ensemble démultiplicateur (50) est en outre défini sous forme de train planétaire (62).

7. Transmission de véhicule électrique (30) de la revendication 6, dans laquelle ledit train planétaire (62) comprend une pluralité de pignons (64) disposés autour dudit axe d'arbre (SA), dans laquelle ladite pluralité de pignons (64) sont de préférence définis sous la forme de trois pignons (64) et particulièrement de préférence sont séparés radialement de 120 degrés les uns des autres autour dudit axe d'arbre (SA).

8. Transmission de véhicule électrique (30) telle que présentée dans l'une quelconque des revendications précédentes, dans laquelle ledit intérieur de carter (34) est divisé en un côté moteur électrique (74) et un côté démultiplication (76).

9. Transmission de véhicule électrique (30) telle que présentée dans la revendication 8, dans laquelle ledit carter (32) dans ledit second bac à huile (38) définit un orifice de purge de trop-plein supérieur (80) pour permettre à de l'huile de s'écouler entre ledit côté moteur électrique (74) et ledit côté démultiplication (76).

10. Transmission de véhicule électrique (30) telle que présentée dans l'une quelconque des revendications 8 et 9, dans laquelle ledit carter (32) dans ledit premier bac à huile (36) définit un orifice de purge de trop-plein inférieur (82) pour permettre à de l'huile de s'écouler entre ledit côté moteur électrique (74) et ledit côté démultiplication (76).

11. Transmission de véhicule électrique (30) telle que présentée dans l'une quelconque des revendications 8 à 10, comprenant en outre une pompe pour faire circuler de l'huile dans ledit côté moteur électrique (74) dudit intérieur de carter (34).

12. Transmission de véhicule électrique (30) telle que présentée dans l'une quelconque des revendications 8 à 11, étant dépourvue d'une pompe pour faire circuler de l'huile dans ledit côté démultiplication (76) dudit intérieur de carter (34).

13. Transmission de véhicule électrique (30) telle que présentée dans l'une quelconque des revendications précédentes, comprenant en outre un ensemble de distribution d'huile (78) disposé dans ledit intérieur de carter (34), dans laquelle ledit ensemble de distribution d'huile (78) est disposé entre ledit second bac à huile (38) et ledit premier bac à huile (36) de manière telle que de l'huile s'écoule depuis ledit second bac à huile (38), jusqu'audit ensemble de distribution d'huile (78), et jusqu'audit premier bac à huile (36) après que l'huile lubrifie l'ensemble démultiplicateur (50).
